# EUROPÄISCHE PATENTSCHRIFT

(11) **EP 4 530 517 B1**
(45) Veröffentlichungstag und Bekanntmachung des Hinweises auf die Patenterteilung: **03.12.2025**
(21) Anmeldenummer: 25158590.7
(22) Anmeldetag: 14.10.2020
(51) Int. Cl.: F16L 37/091

(54) **ZAHNSCHEIBE**
TOOTH WASHER
DISQUE DENTAIRE

(30) Priorität: 16.10.2019 DE 102019127857
(43) Veröffentlichungstag der Anmeldung: 02.04.2025
(62) Teilanmeldung aus: 20792967.0
(73) Patentinhaber: Voss Automotive GmbH, 51688 Wipperfürth (DE)
(72) Erfinder: BRANDT, Josef, 51688 Wipperfürth (DE); ENGELHARD, Frank, 42929 Wermelskirchen (DE); WASCHKEWITZ, Markus, 51702 Bergneustadt (DE); CANPOLAT, Kazim, 41540 Dormagen (DE); KLEHR, Adrian, 58802 Balve (DE)
(74) Vertreter: Dr. Solf & Zapf Patent- und Rechtsanwalts PartG mbB

(56) Entgegenhaltungen:
- WO-A1-2010/003315
- DE-A1- 102013 108 122
- JP-A- 2012 077 804
- US-A1- 2005 173 922
- US-A1- 2007 001 454

## Beschreibung

Die Erfindung betrifft eine Zahnscheibe, insbesondere zur Fixierung einer in einem Fluidverbinder in einer Einsteckrichtung eingeführten Rohrleitung, aufweisend eine ringförmige Basis mit einer Zahnscheibenmittelachse, wobei am Innenumfang der Basis jeweils über einen angeformten federelastischen Biegegelenkabschnitt und einen sich daran anschließenden angeformten Halteabschnitt Schneidzähne radial nach innen und schräg zur Zahnscheibenmittelachse und in Einsteckrichtung verlaufend einteilig an der Basis angeordnet sind, wobei die Schneidzähne derart ausgebildet sind, dass diese bei einer Fixierbewegung der Rohrleitung gegen die Einsteckrichtung in einen Außenumfang der Rohrleitung einschneiden, wobei die Schneidzähne eine Schneidfläche zum Einschneiden in den Außenumfang der zu fixierenden Rohrleitung aufweisen. Die Schneidzähne weisen eine Stützfläche auf. Es ist vorgesehen, dass die Stützfläche von der Schneidfläche betrachtet radial nach außen zurückversetzt ausgebildet ist, so dass das Einschneiden des jeweiligen Schneidzahns bei einer Anlage der Stützfläche auf den Außenumfang der Rohrleitung begrenzt wird. Die Stützfläche ist jeweils zwischen dem Schneidzahn und dem Halteabschnitt einteilig mit dem Schneidzahn und dem Halteabschnitt verbunden angeordnet. Die Stützfläche ist mit einer ersten Biegung im Biegegelenkabschnitt mittels des Halteabschnitts verbunden und mit einer weiteren Biegung mit dem Schneidzahn verbunden. Die Stützfläche schließt in einer von der Zahnscheibenmittelachse abgewandten Richtung einen Stützwinkel mit der Basis ein, welcher kleiner ist als ein Biegewinkel, den der Halteabschnitt in der von der Zahnscheibenmittelachse abgewandten Richtung mit der Basis einschließt. Weiterhin betrifft die Erfindung einen Fluidverbinder zur Rohrleitungsmontage, insbesondere fluidführender Rohrleitungen, aufweisend einen Aufnahmeabschnitt zur Einführung einer Rohrleitung in einer Einführrichtung, sowie ein im Aufnahmeabschnitt angeordnetes Halteelement.

Aus der DE 10 2013 108 122 A1 ist eine Zahnscheibe zur Fixierung einer Rohrleitung in einem Fluidverbinder bekannt. Die Zahnscheibe weist eine ringförmige Basis mit umlaufend gleichmäßig verteilten Schneidzähnen auf, welche sich radial nach innen und schräg zu einer Zahnscheibenmittelachse erstrecken. Dabei weisen die Schneidzähne jeweils eine Stützfläche auf, die von einer Schneidfläche der Schneidzähne radial zur Zahnscheibenmittelachse nach außen zurückversetzt ausgebildet ist.

Aus der WO 2010/003315 A1 ist eine Zahnscheibe bekannt, welche jeweils zwischen einem Schneidzahn und einem Halteabschnitt einteilig mit dem Schneidzahn und dem Halteabschnitt verbunden eine Stützfläche aufweist. Die Stützfläche ist über jeweils eine Biegung mit dem Halteabschnitt und dem Schneidzahn einstückig verbunden. Des Weiteren ist die Stützfläche derart ausgebildet, dass die Stützfläche in einer von einer Zahnscheibenmittelachse abgewandten Richtung einen Stützwinkel mit der Basis einschließt, welcher kleiner ist als ein Biegewinkel, den der Halteabschnitt in der von der Zahnscheibenmittelachse abgewandten Richtung mit der Basis einschließt.

Eine Verbindungsscheibe ist aus der DE 603 03 013 T2 bekannt. Die Verbindungsscheibe hat besonders geformte Zähne. Die Form der Zähne ermöglicht es dabei, einen großen Kontaktbereich zwischen dem jeweiligen Zahn und dem Rohr zu schaffen. Ferner weist die Verbindungsscheibe Verkrallungsspitzen auf, welche durch einen zur Zahnscheibenmittelachse abgerundeten Abschlussrand der Zähne gebildet wird.

Aus der DE 10 2015 122 766 A1 ist eine Zahnscheibe bekannt, welche Materialausstanzungen aufweist, um dadurch die Federelastizität der Schneidzähne zu erhöhen und die notwendigen Einsteckkräfte bei einer Montage einer Rohrleitung zu reduzieren. Damit die Zahnscheibe hohe Haltekräfte generieren kann, weisen die Schneidzähne eine über die Schneidzahnbreite konstant geformte Schneidkante auf. Hierbei ist vorzugsweise ein Umschlingungswinkel für die Rohrleitung von mindestens 70%, insbesondere von 75% bis 95% einzuhalten, um die Funktion zu gewährleisten.

Bei der Montage der Rohrleitung wird die Rohrleitung entlang der Zahnscheibenmittelachse in eine Einführrichtung durch die ringförmige Basis hindurchgesteckt. Die Schneidzähne der Zahnscheibe sind dabei schräg zur Zahnscheibenmittelachse in Einsteckrichtung verlaufend ausgebildet. Die Schneidzähne schließen dabei in einer von der Zahnscheibenmittelachse abgewandten Richtung einen Schneidwinkel mit der Basis ein. Dabei sind die Schneidzähne derart schräg zur Basis in Einsteckrichtung verlaufend ausgebildet, dass der Schneidwinkel insbesondere größer 90° und vorzugsweise kleiner/gleich 180° ist.

Beim Einführen der Rohrleitung werden die Schneidzähne von der Rohrleitung radial von der Zahnscheibenmittelachse weggebogen. Eine Montage-Endstellung ist erreicht, wenn die Rohrleitung bis auf ein Maximum in den Fluidverbinder eingesteckt ist. Durch eine Rückstellkraft der federelastischen Biegegelenke und eine Systemdruckbelastung der Rohrleitung wird die Rohrleitung in einer Fixierbewegung entgegen der ursprünglichen Einführrichtung verschoben, so dass die Schneidzähne in den Außenumfang der Rohrleitung einschneiden. Durch die Fixierbewegung der Rohrleitung in Verbindung mit dem Einschneiden der Schneidzähne vergrößert sich bei der Fixierbewegung der Schneidwinkel der Schneidzähne, das heißt, dass die Schneidzähne mit zunehmender Fixierbewegung stetig in eine Lage senkrecht zur Zahnscheibenmittelachse tendieren. Dadurch schneiden die Schneidzähne mit zunehmender Fixierbewegung der Rohrleitung tiefer in die Rohrleitung.

Bei den aus dem Stand der Technik bekannten Zahnscheiben kommt es grundsätzlich zu zwei Versagensarten. Zum einen entsteht ein Abschneiden bzw. Abreißen des Rohres, wenn im montierten Zustand die Schneidzähne durch eine unkontrollierte Fixierbewegung auf Grund eines zu großen Systemdrucks oder einer Zugbelastung der Rohrleitung selbst in einem zu großen Schneidwinkel stehen und dadurch zu tief in den Außenumfang der Rohrleitung einschneiden. Insbesondere wird die Rohrleitung dadurch derart geschwächt, dass die Rohrleitung dem Systemdruck oder einer Zugbelastung an der Rohrleitung selbst nicht mehr standhalten kann, so dass die Rohrleitung abreißt. Zum anderen kommt es zu einem Abschälen der Rohrleitung, wenn während der Fixierbewegung und/oder in einem montierten Zustand die Schneidzähne in einem zu flachen Schneidwinkel stehen. Die Folge davon ist, dass die Rohrleitung nicht genügend fixiert ist, um einer Lösekraft zu widerstehen, und der Außenumfang der Rohrleitung bei der Fixierbewegung lediglich abgeschält wird und die Rohrleitung keine fixierte Einbaulage einnimmt.

Der Erfindung liegt die Aufgabe zugrunde, eine Zahnscheibe bereitzustellen, welche die aus dem Stand der Technik bekannten Probleme überwindet, indem sie insbesondere das Einschneidverhalten der Schneidzähne zumindest dadurch verbessert, dass ein Verdrehen und Verkanten der Zahnscheibe verhindert wird.

Die Aufgabe wird durch die Merkmale des Anspruchs 1 dadurch gelöst, dass der Biegewinkel in einem nicht montierten Zustand in einem Bereich zwischen kleiner/gleich 175° und größer/gleich 135° liegt.

Durch die erfindungsgemäße Ausbildung wird das Einschneidverhalten vorteilhaft verbessert. Die Gestaltung der Schneidzähne bewirkt, dass dadurch sowohl der Schneidwinkel der Schneidzähne, welcher sich bei zunehmender Fixierbewegung stetig vergrößert, als auch die Fixierbewegung selbst bestimmbar ist. Somit kann das Einschneidverhalten der Zahnscheibe der jeweiligen zu montierenden Rohrleitung, insbesondere in Bezug auf deren Material, Durchmesser und Abmessungen, ideal angepasst werden. Die aus dem Stand der Technik bekannten Nachteile, insbesondere ein Abschneiden bzw. Abreißen oder Abschälen, werden dadurch effektiv vermieden.

In einer vorteilhaften Ausführung der Erfindung weisen die Schneidzähne jeweils mindestens zwei Zähne auf, an welchen die Schneidflächen ausgebildet sind. Hierbei ist vorzugsweise zwischen den Zähnen jeweils die Stützfläche ausgebildet, wobei die Schneidflächen insbesondere fluchtend zu den Stützflächen ausgebildet sind. Besonders vorteilhaft lässt sich in dieser Ausführung auf einfache Art und Weise das Einschneiden des jeweiligen Schneidezahns begrenzen. Dadurch, dass die Schneidflächen insbesondere fluchtend zu den Stützflächen ausgebildet sind und die Stützfläche gleichzeitig radial nach außen von der Schneidfläche betrachtet zurückversetzt ausgebildet ist, kann auf einfache Weise mittels eines daraus resultierenden Überstands der Schneidfläche zu der Stützfläche eine Einschneidtiefe eingestellt werden. Hierbei entspricht die Einschneidtiefe des jeweiligen Schneidzahns in einer montierten und fixierten Rohrleitung dem Überstand. Die Anlage der Stützfläche am Außenumfang der Rohrleitung begrenzt somit ein weiteres Einschneiden und behindert eine weitere Fixierbewegung.

Insbesondere weisen die Schneidflächen der Schneidzähne jeweils eine Schneidoberfläche und die Stützfläche der Schneidzähne jeweils eine Stützoberfläche auf. Die Schneidoberfläche berechnet sich jeweils pro Schneidzahn insbesondere aus einer Schneidbreite, welche der Länge der Schneidflächen senkrecht zur Zahnscheibenmittelachse entspricht, multipliziert mit der Schneiddicke, welche der axialen Erstreckung der Schneidflächen zu der Zahnscheibenmittelachse im Bereich der Schneidflächen entspricht. Die Stützoberfläche berechnet sich jeweils pro Schneidzahn insbesondere aus einer Stützbreite, welche der Länge der Stützflächen senkrecht zu der Zahnscheibenmittelachse entspricht, multipliziert mit der Stützdicke, welche der axialen Erstreckung zur Zahnscheibenmittelachse im Bereich der Stützflächen entspricht.

Für die Definition der Schneiddicke und Stützdicke bezieht sich die axiale Erstreckung relativ zur Zahnscheibenmittelachse auf einen unverformten Zustand der Zahnscheibe. Die Zahnscheibe wird insbesondere in einem Presswerkzeug geformt, wobei die Schneidzähne im unverformten Zustand vorzugsweise vollständig zusammen mit der ringförmigen Basis und den federelastischen Biegegelenkabschnitten fluchtend in einer Ebene senkrecht zur Zahnscheibenmittelachse liegend ausgerichtet sind. Insbesondere wird im Formungsprozess die Zahnscheibe lediglich gebogen, wobei die Schneiddicke und Stützdicke vorzugsweise nach dem Formungsprozess im Presswerkzeug erhalten bleiben.

Insbesondere sind die Schneidflächen und/oder die Stützflächen jeweils als Teilkreissegmente um einen Mittelpunkt gebogen ausgebildet und vorzugsweise die Mittelpunkte jeweils zu der Zahnscheibenmittelachse ausgerichtet, wobei insbesondere die Mittelpunkte der Teilkreissegmente, vorzugsweise im unverformten Zustand der Zahnscheibe, in der Zahnscheibenmittelachse liegen. Vorteilhaft wird für die Schneidbreite die Bogenlänge der Schneidfläche um den jeweiligen Teilkreissegmentmittelpunkt verwendet. Entsprechend wird für die Stützfläche insbesondere die Bogenlänge der Stützfläche um den jeweiligen Teilkreissegmentmittelpunkt verwendet.

Gemäß einer Ausführungsform weisen die Schneidflächen, wie beschrieben, jeweils die Schneiddicke auf, welche der axialen Erstreckung der Schneidflächen zu der Zahnscheibenmittelachse im Bereich der Schneidflächen entspricht, und die Stützflächen weisen jeweils die Stützdicke auf, welche der axialen Erstreckung zu der Zahnscheibenmittelachse im Bereich der Stützflächen entspricht, wobei die Stützdicke der Stützfläche vorzugsweise, zumindest teilweise, größer ist als die Schneiddicke der Schneidfläche. Gemäß einer besonders bevorzugten Ausführungsform ist die Stützdicke der Stützfläche insbesondere zumindest teilweise doppelt so groß wie die Schneiddicke der Schneidfläche. Die vergrößerte Stützdicke vergrößert die Stützoberfläche derartig, dass bei der Anlage der Stützfläche auf den Außenumfang der Rohrleitung das Einschneiden des jeweiligen Schneidzahns erheblich stärker erschwert wird, als bei lediglich einer fluchtend radial zur Zahnscheibenmittelache von der Schneidfläche zurückversetzten Stützfläche.

Für ein bevorzugtes Einschneidverhalten weist jeder Schneidzahn ein Verhältnis von einer Summe der Schneidoberflächen der Schneidflächen zu einer Summe der Stützoberflächen der Stützflächen auf, welches in einem Bereich von 0,8 bis 1,2, insbesondere 0,9 bis 1,1 liegt, bevorzugt 1 entspricht.

In einer bevorzugten Ausführung schließt der Schneidzahn in der von der Zahnscheibenmittelachse abgewandten Richtung einen Schneidwinkel mit der Basis ein, wobei der Schneidwinkel vorzugsweise größer ist als der Stützwinkel.

Die Gestaltung des Biegewinkels stellt bei dieser Ausführung insbesondere einen Hebel für den Halteabschnitt ein. Abhängig vom kleinsten Abstand des Halteabschnitts radial zur Zahnscheibenmittelachse sowie dem Biegewinkel selbst wird eine Anpressung zwischen der Stützfläche und dem Außenumfang der Rohrleitung eingestellt.

Erfindungsgemäß ist der Biegewinkel derart gewählt, dass er in einem nicht montierten Zustand in einem Bereich zwischen kleiner/gleich 175° und größer/gleich 135° liegt, weil ab einem Winkel größer als 175° die Schneidzähne bei der Fixierbewegung der zu montierenden Rohrleitung gegen die Einsteckrichtung axial zur Zahnscheibenmittelachse umschlagen und die Rohrleitung durchschneiden würden. Andererseits würde bei einem Biegewinkel kleiner als 135° die radiale Klemmkraft zu gering sein und es käme zu einem Abschälen der zu montierenden Rohrleitung.

Mittels dieser Ausführung wird die Rohrleitung insbesondere an zwei axial zur Zahnscheibenmittelachse versetzten Lagen am Außenumfang gesichert. Vorzugsweise erzeugt die Zahnscheibe durch das Einschneiden der Schneidflächen in einer Einschneidebene in den Außenumfang der Rohrleitung einen Kraft-Form-Schluss. Weiterhin entsteht durch die vorteilhafte Bewinkelung der einzelnen Abschnitte bei der Fixierbewegung und der dabei entstehenden Tendenz des Schneidzahns, den Schneidwinkel zu vergrößern, eine radial zur Zahnscheibenmittelachse gerichtete Anpressung zwischen der Stützfläche und dem Außenumfang des Rohres. Dieser Kraftschluss erfolgt insbesondere über den Umfang des Außenrohres gleichmäßig verteilt in einer axial zur Zahnscheibenmittelachse von der Einschneidebene in Richtung der Fixierbewegung versetzten und parallel zur Einschneidebene ausgerichteten Pressebene.

Weiterhin wird durch eine derartige Ausführung mittels der Stützfläche synergetisch das Einschneidverhalten verbessert, da das Einschneiden in eine zu fixierende Rohrleitung bei der Fixierbewegung durch die Anlage der Stützfläche auf dem Außenumfang der Rohrleitung begrenzt wird, und gleichzeitig durch die Verformung des Schneidzahns bei der Fixierbewegung die Stützfläche radial gegen den Außenumfang gepresst wird und die Lage der Rohrleitung relativ zu der Zahnscheibe ergänzend mit einem Kraftschluss sichert.

Die Zahnscheibe wird vorzugsweise in einem Presswerkzeug geformt, wobei die Schneidflächen in einem unverformten Zustand der Zahnscheibe einen inneren Ausgangsumfang aufweisen, welcher kleiner ist als ein innerer Umfang der zu fixierenden Rohrleitung. Der Biegewinkel der fertig geformten Zahnscheibe sowie die Längen der Stützfläche, des Schneidzahns und des Halteabschnitts sind vorzugsweise derart gewählt, dass unter der Annahme, dass die Stützfläche und der Schneidzahn jeweils mit dem Halteabschnitt geradlinig verbunden sind, die Schneidflächen der Schneidzähne in einem inneren Zwischenumfang liegen, welcher zu einem Abschneiden oder Abreißen der Rohrleitung insbesondere unter einer Systemdruckbelastung führen würde.

Des Weiteren wird die der Erfindung zu Grunde liegende Aufgabe durch einen Fluidverbinder zur Rohrleitungsmontage, insbesondere fluidführender Rohrleitungen, aufweisend einen Aufnahmeabschnitt zur Einführung einer Rohrleitung in einer Einführrichtung, sowie ein im Aufnahmeabschnitt angeordnetes Halteelement dadurch gelöst, dass das Halteelement als eine Zahnscheibe mit den Merkmalen nach einem der Ansprüche 1 bis 10 ausgebildet ist.

Weitere vorteilhafte Ausgestaltungen der Erfindung ergeben sich aus der folgenden Figurenbeschreibung und den abhängigen Unteransprüchen.

Es zeigen:
- Fig. 1: eine Draufsicht auf eine nicht erfindungsgemäße Ausführung einer Zahnscheibe 1,
- Fig. 2: eine Schnittansicht der Zahnscheibe 1 aus Figur 1 entlang A-A gemäß Figur 1,
- Fig. 3 bis 6: einen Montageablauf einer Rohrleitung 6 mit der Zahnscheibe 1 aus Figur 1 jeweils in zwei Schnittansichten entlang A-A und B-B gemäß Figur 1,
- Fig. 7: eine Draufsicht auf eine weitere nicht erfindungsgemäße Ausführung einer Zahnscheibe 1,
- Fig. 8: eine Schnittansicht der Zahnscheibe 1 aus Figur 7 entlang C-C gemäß Figur 7,
- Fig. 9a: eine perspektivische Ansicht auf eine erfindungsgemäße Ausführung einer Zahnscheibe 1,
- Fig. 9b: eine perspektivische Ansicht auf eine weitere erfindungsgemäße Ausführung einer Zahnscheibe 1,
- Fig. 10: eine Schnittansicht der Zahnscheibe 1 aus Figur 9a entlang D-D gemäß Figur 9a,
- Fig. 11 bis 14: einen Montageablauf einer Rohrleitung 6 mit der Zahnscheibe 1 aus Figur 9a jeweils entlang D-D gemäß Figur 9a und
- Fig. 15: eine Schnittansicht eines erfindungsgemäßen Fluidverbinders entlang des Strömungsverlaufs eines den Fluidverbinders zu durchströmenden Fluides.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

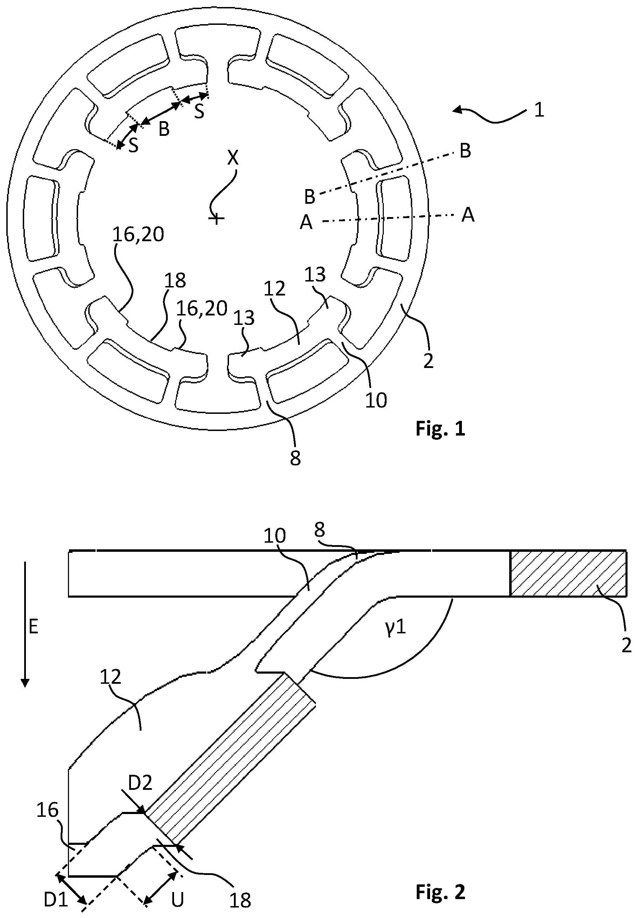

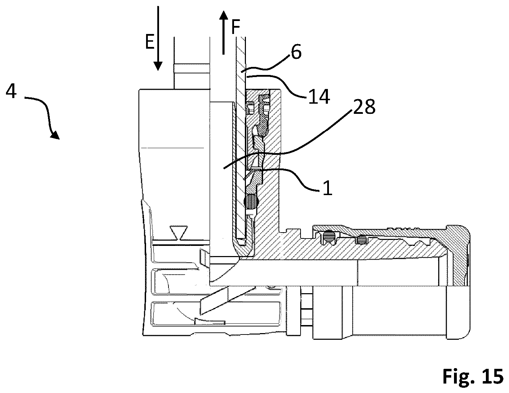

Die Figuren 1 bis 8 zeigen nicht erfindungsgemäße Varianten einer Zahnscheibe 1. In den Figuren 1, 7, 9a und 9b ist eine Zahnscheibe 1, aufweisend eine ringförmige Basis 2 mit einer Zahnscheibenmittelachse X dargestellt. Derartige Zahnscheiben 1 dienen vorzugsweise einer Fixierung einer in einem Fluidverbinder 4 in einer, in den Figuren 2, 8 und 10 dargestellten, Einsteckrichtung E eingeführten Rohrleitung 6. Der Fluidverbinder 4 mit eingeführter Rohrleitung 6 ist in Figur 15 dargestellt.

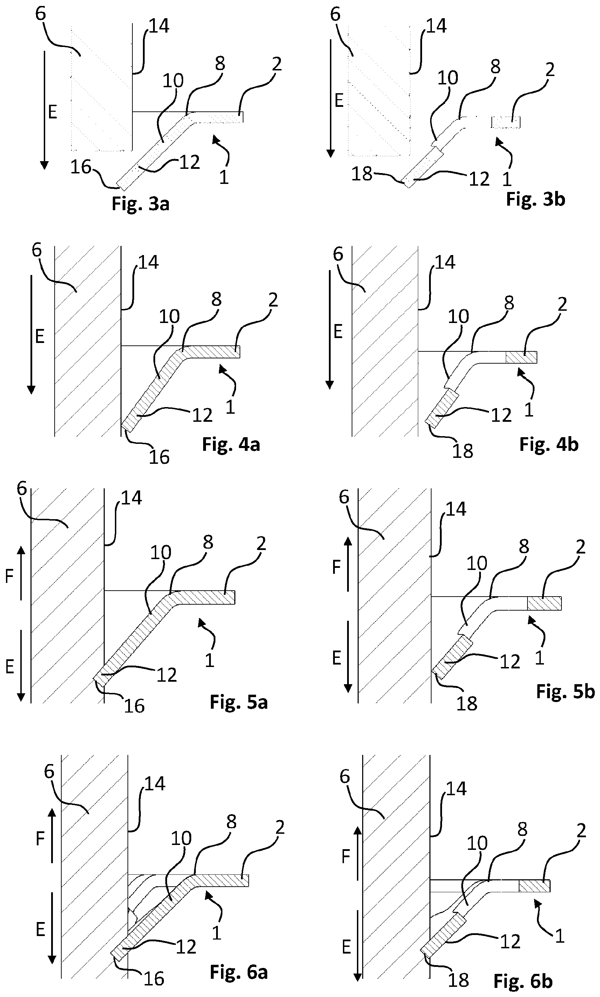

Am Innenumfang der Basis 2 sind, wie in den Figuren 1, 7, 9a und 9b dargestellt, jeweils über einen angeformten federelastischen Biegegelenkabschnitt 8 und einen sich daran anschließenden angeformten Halteabschnitt 10 Schneidzähne 12 radial nach innen und schräg zur Zahnscheibenmittelachse X an der Basis 2 einteilig angeordnet, wobei die Schneidzähne 12 in Einsteckrichtung E verlaufen. Weiterhin sind die Schneidzähne 12 derart ausgebildet, dass diese bei einer Fixierbewegung F der Rohrleitung 6, wie in den Figuren 3a bis 6a und 11 bis14 dargestellt, gegen die Einsteckrichtung E in einen Außenumfang 14 der Rohrleitung 6 einschneiden. Dafür weisen die Schneidzähne 12 eine Schneidfläche 16 zum Einschneiden in den Außenumfang 14 der zu fixierenden Rohrleitung 6 auf.

Insbesondere schließen die Schneidzähne 12 im Bereich der Schneidflächen 16, wie in den Figuren 2, 8 und 10 dargestellt, einen Schneidwinkel γ1, γ2, γ3 in der von der Zahnscheibenmittelachse X abgewandten Richtung mit der Basis 2 ein. Dieser Schneidwinkel γ1, γ2, γ3, siehe Figuren 2, 8 und 10, beträgt insbesondere 120° bis 150°, vorzugsweise 130° bis 140°.

Vorzugsweise sind die Schneidzähne 12 gleichmäßig über den Umfang der ringförmigen Basis 2 verteilt. Die Schneidzähne 12 bilden dabei mit ihren Schneidflächen 16 jeweils einen Umschlingungswinkel, d. h. einen Winkelabschnitt, in welchem der jeweilige Schneidzahn 12 in den Außenumfang 14 der zu fixierenden Rohrleitung 6 einschneidet. Gemäß einer vorteilhaften Ausführung weisen die Schneidzähne 12 gemeinsam einen umfangsgemäßen Umschlingungswinkel von mindestens 70%, insbesondere von 75% bis 95% des Umfangs der Rohrleitung 6 auf.

In den Schnittansichten der Figuren 2, 8 und 10 ist dargestellt, dass die Schneidzähne 12 eine Stützfläche 18 aufweisen und die Stützfläche 18 von der Schneidfläche 16 betrachtet radial nach außen, ausgehend von der Zahnscheibenmittelachse X aus betrachtet zurückversetzt ausgebildet ist. Dadurch wird das Einschneiden des jeweiligen Schneidzahns 12 bei einer Anlage der Stützfläche 18 auf dem Außenumfang 14 der Rohrleitung 6 begrenzt.

Durch die vorgenannte Ausführung wird das Einschneidverhalten vorteilhaft verbessert. Die Gestaltung der Schneidzähne 12 bewirkt, dass dadurch sowohl der Schneidwinkel γ1, γ2, γ3 der Schneidzähne 12, welcher sich bei zunehmender Fixierbewegung F stetig vergrößert, als auch die Fixierbewegung F selbst bestimmbar ist. Das hat zur Folge, dass die Eindringtiefe der Schneidzähne 12 in die Rohrleitung 6 begrenzt und ein Einschneidwinkel, welchen die Schneidzähne 12 mit dem Außenumfang 14 der Rohrleitung 6 einschließen, eingestellt werden kann. Ein Abschälen oder ein Abschneiden bzw. Abreißen bei der Fixierung einer Rohrleitung 6 wird dadurch auf effektive Weise verhindert. Somit kann das Einschneidverhalten der Zahnscheibe 1 an die jeweilige zu montierende Rohrleitung 6, insbesondere in Bezug auf deren Material, Durchmesser und Abmessungen, ideal angepasst werden.

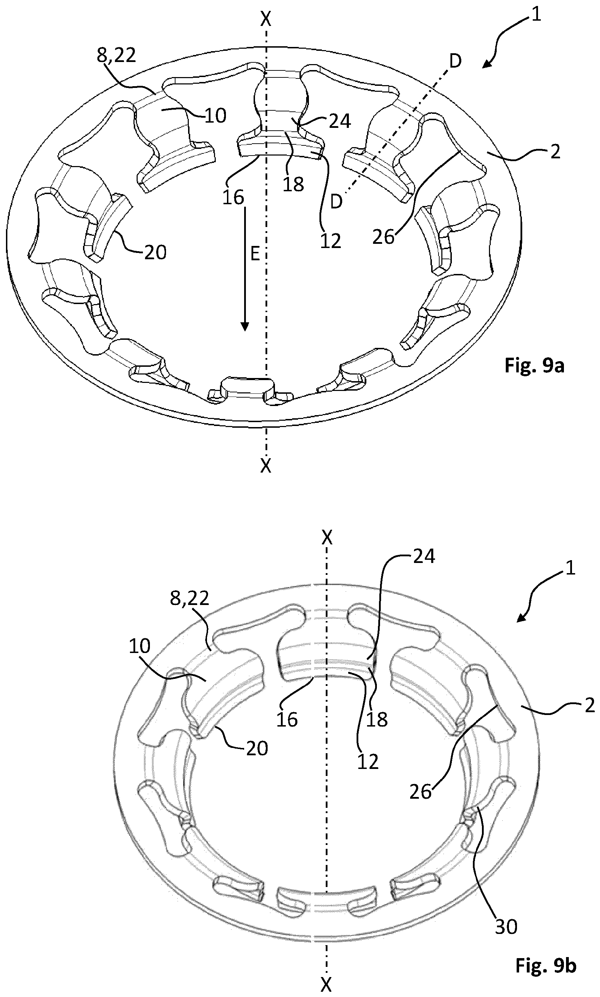

Vorzugsweise sind die Schneidflächen 16 und/oder die Stützflächen 18 jeweils als Teilkreissegmente 20 um einen Mittelpunkt gebogen ausgebildet. Hierbei sind die Mittelpunkte insbesondere jeweils zu der Zahnscheibenmittelachse X ausgerichtet, wobei vorzugsweise die Mittelpunkte der Teilkreissegmente 20, bevorzugt im unverformten Zustand der Zahnscheibe, in der Zahnscheibenmittelachse X liegen. Insbesondere in den Figuren 1, 9a und 9b ist diese vorteilhafte Ausführung dargestellt. Vorteilhaft wird durch die Teilkreissegmentausbildung ein gleichmäßiges Einschneiden erreicht.

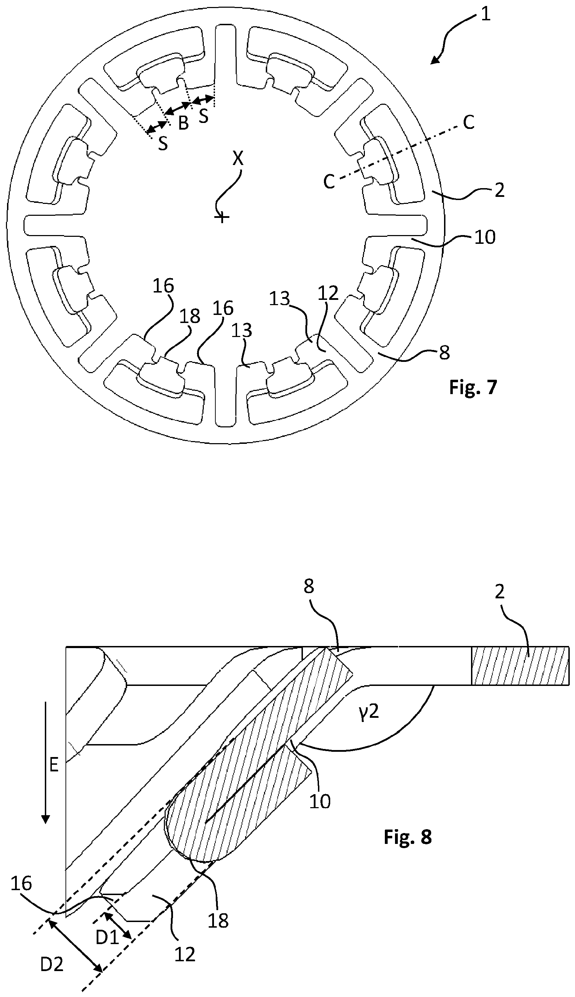

In den Figuren 1 und 7 sind zwei nicht erfindungsgemäße Ausführungen der Zahnscheibe 1 dargestellt. Gemäß dieser Ausführung weisen die Schneidzähne 12 insbesondere jeweils mindestens zwei Zähne 13 auf. An diesen Zähnen 13 ist die Schneidfläche 16 ausgebildet, wobei vorzugsweise zwischen den Zähnen 13 jeweils die Stützfläche 18 ausgebildet ist. Vorzugsweise sind dabei die Schneidflächen 16 dieser Ausführungen jeweils fluchtend zu den Stützflächen 18 ausgebildet.

Besonders vorteilhaft wird gemäß dieser Ausführung, wie insbesondere der Montageablauf in den Figuren 3 bis 6 zeigt, das Einschneiden des jeweiligen Schneidezahns 12 begrenzt. Dadurch, dass die Schneidflächen 16 insbesondere fluchtend zu den Stützflächen 18 ausgebildet sind und die Stützfläche 18 gleichzeitig radial nach außen von der Schneidfläche 16 betrachtet zurückversetzt ausgebildet ist, kann auf einfache Weise mittels eines daraus resultierenden Überstands U der Schneidfläche 16 zu der Stützfläche 18 eine Einschneidtiefe eingestellt werden. Der Überstand U ist in Figur 2 dargestellt. Hierbei entspricht die Einschneidtiefe des jeweiligen Schneidzahns 12 vorzugsweise dem Überstand U. Es kann aber auch vorgesehen sein, dass die Stützflächen 18 ebenfalls in den Außenumfang 14 der zu montierenden Rohrleitung 6 eindringen, um den Umschlingungswinkel zu erhöhen und eine zusätzliche axiale Fixierung der Rohrleitung 6 zu erwirken. Die Anlage der Stützfläche 18 am Außenumfang 14 der Rohrleitung 6 begrenzt somit ein weiteres Einschneiden und behindert eine weitere Fixierbewegung F.

Vorteilhaft ist die Stützfläche 18 stumpf, insbesondere wird die Stützfläche im Herstellungsprozess stumpf geprägt, damit sie weniger bzw. nur schwach in den Außenumfang 14 der zu montierenden Rohrleitung 6 einschneiden kann.

Der in den Figuren 3a bis 6b dargestellte Montageablauf zeigt die Zahnscheibe 1 gemäß der vorteilhaften Ausführung von Figur 1. Dieser Montageablauf ist weiterhin vollständig auf die Zahnscheibe 1 gemäß der alternativen Ausführung von Figur 7 übertragbar. Hierbei ist in den Figuren 3a, 4a, 5a und 6a der jeweilige Zustand gemäß der Schnittlinie B-B aus Figur 1 dargestellt. Entsprechend ist in den Figuren 3b, 4b, 5b und 6b der jeweilige Zustand gemäß der Schnittlinie A-A aus Figur 1 dargestellt.

In den Figuren 3a und 3b ist dabei die Zahnscheibe 1 in einem Zustand ohne jeglichen Kontakt zu der zu montierenden Rohrleitung 6 dargestellt. In diesem Zustand weist die Zahnscheibe 1 einen Schneidwinkel von 120° bis 150°, vorzugsweise 130° bis 140° auf, wobei die Schneidflächen 16 der Schneidzähne 12 in einer inneren Kreisbahn angeordnet sind, welche einen geringeren Durchmesser aufweist als der Außenumfang 14 der zu montierenden Rohrleitung 6.

In den Figuren 4a und 4b ist die Rohrleitung 6 in Einsteckrichtung E an den Schneidflächen 16 vorbeigeführt, wodurch die Schneidzähne 12 radial von der Zahnscheibenmittelachse X nach außen gedrückt wurde und sich dadurch der Schneidwinkel γ1, γ2 verringert hat.

Gemäß dem in den Figuren 5a und 5b dargestellten Zustand wurde die Rohrleitung 6 mit einer Fixierbewegung F aus dem in den Figuren 4a und 4b dargestellten Zustand gegen die Einsteckrichtung E bewegt. Mittels einer federelastischen Rückstellwirkung der Schneidzähne 12 schneiden selbige, abhängig von dem Material der Rohrleitung 6 und der Geometrie der Schneidflächen 16 in den Außenumfang 14 der Rohrleitung 6 ein. In Figur 5b ist dargestellt, dass die Stützfläche 18 ab einer vorbestimmten, in Figur 5a dargestellten, Einschneidtiefe in einen Anlagekontakt zu dem Außenumfang 14 mit der Rohrleitung 6 kommt.

Die Figuren 6a und 6b zeigen eine Ausführung, bei der über den ersten Anlagekontakt der Stützfläche 18 auf dem Außenumfang 14 der Rohrleitung 6 die Stützfläche 18 selbst ergänzend zu der Schneidfläche 16 in den Außenumfang 14 der Rohrleitung 6 einschneidet und unterstützend die Rohrleitung 6 axial zur Zahnscheibenmittelachse X fixiert.

Vorteilhaft bei den in den Figuren 1 und 7 dargestellten Ausführungen der Zahnscheibe 1 weisen die Schneidflächen 16 der Schneidzähne 12 jeweils eine Schneidoberfläche und die Stützfläche 18 der Schneidzähne 12 jeweils eine Stützoberfläche auf. Vorzugsweise weist jeder Schneidzahn 12 ein Verhältnis von einer Summe der Schneidoberflächen der Schneidflächen 16 zu einer Summe der Stützoberflächen der Stützflächen 18 auf, welches in einem Bereich von 0,8 bis 1,2, insbesondere 0,9 bis 1,1 liegt oder bevorzugt 1 entspricht.

Die Schneidoberfläche berechnet sich jeweils pro Schneidzahn 12 insbesondere aus einer Schneidbreite S, siehe Figur 1, welche der Länge der Schneidflächen 16 senkrecht zur Zahnscheibenmittelachse X entspricht, multipliziert mit der Schneiddicke D1, siehe Figur 2, welche der axialen Erstreckung der Schneidflächen 16 zu der Zahnscheibenmittelachse X im Bereich der Schneidflächen 16 entspricht. Die Stützoberfläche berechnet sich jeweils pro Schneidzahn 12 insbesondere aus einer Stützbreite B, welche der Länge der Stützflächen 18 senkrecht zu der Zahnscheibenmittelachse X entspricht, multipliziert mit der Stützdicke D2, welche der axialen Erstreckung zur Zahnscheibenmittelachse X im Bereich der Stützflächen 18 entspricht.

Für die Definition der Schneiddicke D1 und der Stützdicke D2 bezieht sich die axiale Erstreckung relativ zur Zahnscheibenmittelachse X auf einen unverformten Zustand der Zahnscheibe 1. Die Schneidzähne 12 sind im unverformten Zustand vorzugsweise vollständig zusammen mit der ringförmigen Basis 2 und den federelastischen Biegegelenkabschnitten 8 fluchtend in einer Ebene senkrecht zur Zahnscheibenmittelachse X liegend ausgerichtet. Insbesondere bleiben die Schneiddicke D1 und die Stützdicke D2 nach dem Formungsprozess erhalten.

Insbesondere wenn die Schneidflächen 16 und/oder die Stützflächen 18 jeweils als Teilkreissegmente 20 um einen Mittelpunkt gebogen ausgebildet sind, entsprechend der in Figur 1 dargestellten Ausführung, und vorzugsweise die Mittelpunkte jeweils zu der Zahnscheibenmittelachse X ausgerichtet sind, wobei insbesondere die Mittelpunkte der Teilkreissegmente 20, vorzugsweise im unverformten Zustand, in der Zahnscheibenmittelachse X liegen, wird vorteilhaft für die Schneidbreite S die Bogenlänge der Schneidfläche 16 um den jeweiligen Teilkreissegmentmittelpunkt verwendet. Entsprechend wird für die Stützbreite B der Stützfläche 18 insbesondere die Bogenlänge der Stützfläche 18 um den jeweiligen Teilkreissegmentmittelpunkt verwendet.

Entsprechend der Zahnscheibe 1 gemäß Figur 1 weisen die Schneidflächen 16 der Zahnscheibe 1 gemäß der in Figur 7 und 8 dargestellten Ausführung vorteilhaft jeweils die Schneiddicke D1, siehe Figur 8, auf, welche der axialen Erstreckung der Schneidflächen 16 zu der Zahnscheibenmittelachse X im Bereich der Schneidflächen 16 entspricht, und die Stützflächen 18 weisen insbesondere jeweils die in Figur 8 dargestellte Stützdicke D2 auf, welche der axialen Erstreckung im Bereich der Stützflächen 18 entspricht. Anders als die in Figur 1 dargestellte Ausführung ist bei der in Figur 7 dargestellten Ausführung die Stützdicke D2 der Stützfläche 18 vorzugsweise zumindest teilweise größer als die Schneiddicke D1 der Schneidfläche 16. Diese Ausführung ist insbesondere in Figur 8 erkennbar, wobei Figur 8 eine besonders bevorzuge Ausführung dargestellt, gemäß welcher die Stützdicke D2 der Stützfläche 18 insbesondere zumindest teilweise doppelt so groß ist wie die Schneiddicke D1 der Schneidfläche 16. Die Figuren 8 und 7 zeigen dabei, dass die vergrößerte Stützdicke D2 beim Herstellungsprozess der Zahnscheibe 1 durch einfaches Umlegen bzw. Falten einer mit dem Schneidzahn 12 verbundenen Zunge erzeugt werden kann.

Wie bereits geschildert, ist der Montageablauf gemäß den Figuren 3a bis 6b auf die in den Figuren 7 und 8 dargestellte Ausführungsform übertragbar, wobei durch die vergrößerte Stützfläche 18 die begrenzende Wirkung der zurückversetzten Stützfläche 18 auf das Einschneiden des jeweiligen Schneidzahns 12 verstärkt ist.

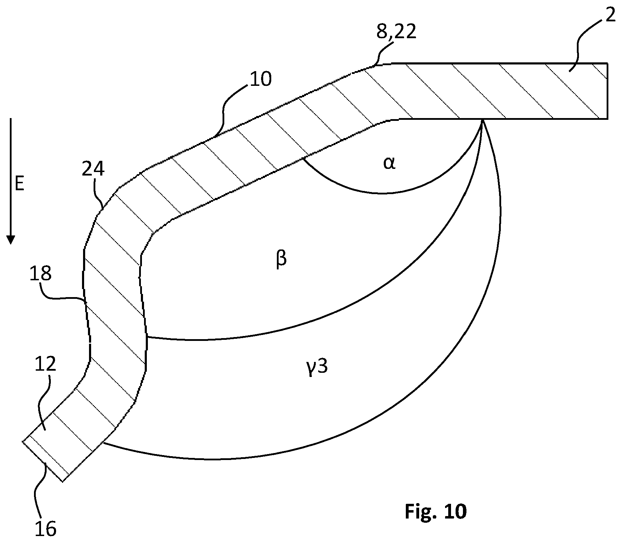

In den Figuren 9a bis 14 sind weitere alternative Ausführungen der Zahnscheibe 1 dargestellt. Dabei unterscheidet sich die in Figur 9b dargestellte Ausführung durch einen verstärkten Abstützbereich 30, in welchem zumindest die Stützfläche 18 angeordnet ist, und in der Anzahl der Schneidzähne 12 von der in Figur 9a dargestellten Ausführung. Diese Ausführungen zeichnen sich im Gegensatz zu der Zahnscheibe 1 gemäß der in Figur 1 oder 7 dargestellten Ausführung durch eine andere Anordnung der Stützfläche 18 aus, wobei die in den Figuren 9 bis 14 gezeigten Ausführungen zusätzlich mit den bereits zuvor genannten Ausführungen gemäß den Figuren 1 bis 8 kombinierbar sind und ergänzt werden können. Zur Veranschaulichung ist in den Figuren 10 bis 14 ein Schnitt entlang D-D gemäß Figur 9a dargestellt, allerdings sind die nachfolgend beschriebenen vorteilhaften Ausführungen auf die Ausführung in Figur 9b übertragbar.

Vorzugsweise ist die Anzahl der Schneidzähne an das zu erreichende Einsteckverhalten angepasst. Zweckmäßig kann die Zahnscheibe 1 entsprechend der in Figur 9a dargestellten Ausführung zehn Schneidzähne 12 ausgebildet haben. Gemäß einer weiteren vorteilhaften Ausführung kann die Zahnscheibe 1 entsprechend der in Figur 9b dargestellten Ausführung acht Schneidzähne 12 ausgebildet haben.

In den in den Figuren 9a, 9b und 10 dargestellten erfindungsgemäßen Ausführungen ist die Stützfläche 18 jeweils zwischen dem Schneidzahn 12 und dem Halteabschnitt 10 einteilig mit dem Schneidzahn 12 und dem Halteabschnitt 10 verbunden angeordnet. Die Stützfläche 18 ist mit einer im Biegegelenkabschnitt 8 angeordneten ersten Biegung 22 mit dem Halteabschnitt 10 verbunden und mit einer weiteren Biegung mit dem Schneidzahn 12 verbunden. Die Stützfläche 18 schließt in einer von der Zahnscheibenmittelachse X abgewandten Richtung einen Stützwinkel β mit der Basis 2 ein. Der Stützwinkel β ist kleiner als ein Biegewinkel α, den der Halteabschnitt 10 in der von der Zahnscheibenmittelachse X abgewandten Richtung mit der Basis 2 einschließt. Besonders bevorzugt schließt der Schneidzahn 12 in der von der Zahnscheibenmittelachse X abgewandten Richtung einen Schneidwinkel γ3 mit der Basis 2 ein. Insbesondere ist dabei der Schneidwinkel γ3 größer als der Stützwinkel β.

Zweckmäßig kann die Stützbreite B der Stützfläche 18, welche wie zu den Figuren 1 bis 8 beschrieben bestimmt wird, geringer ausgebildet sein als die Schneidbreite S des Schneidzahns 12, welche ebenfalls wie zu den Figuren 1 bis 8 beschrieben bestimmt wird. Diese Ausführung ist in Figur 9a dargestellt. Die Stützbreite B und die Schneidbreite S sind in den Figuren 9a und 9b nicht dargestellt. Die verringerte Stützbreite B hat den Vorteil, dass die Elastizität verbessert und die für eine Verformung bzw. Verschiebung des Schneidzahns 12 notwendige Kraft geringgehalten wird. Insbesondere ist dadurch das Montieren der Rohrleitung 6, insbesondere in Einsteckrichtung E, möglichst einfach.

Entsprechend der in Figur 9b dargestellten Ausführung ist die Stützfläche 18 vorteilhaft in einem verstärkten Abstützbereich 30 angeordnet. Der verstärkte Abstützbereich 30 ist insbesondere gegenüber der in Figur 9a dargestellten Ausführung eine Vergrößerung der Stützbreite B der Stützfläche 18. Insbesondere entspricht die Stützbreite B der Stützfläche 18, wie in der Figur 9b dargestellt, der Schneidbreite S des Schneidzahns 12. Besonders vorteilhaft umfasst der verstärkte Abstützbereich 30 die Stützfläche 18, eine zweite Biegung 24 und den Halteabschnitt zumindest teilweise. Zweckmäßig schließt sich dabei der verstärkte Abstützbereich 30 unmittelbar dem Schneidzahn 12 an. Die vergrößerte Stützbreite B erhöht die für eine Verformung bzw. eine Verschiebung des Schneidzahns 12 notwendige Kraft und vergrößert die stützende Wirkung der Stützfläche 18. Besonders vorteilhaft ist der verstärkte Abstützbereich 30 bei der Montage von Rohrleitungen 6 mit einem widerstandsfähigen Außenumfang 14 ausgebildet. Die verstärkte Stützbreite B, insbesondere die verstärkte zweite Biegung 24, erhöhen die Kraft der federelastischen Rückstellwirkung der Schneidzähne 12, wenn diese durch die Rohrleitung 6 verformt bzw. verschoben worden sind. Dadurch schneiden die Schneidzähne 12 leichter in den Außenumfang 14 der Rohrleitung 6 und die Gefahr eines Durchrutschens der Rohrleitung 6 wird verringert.

Die verstärkte Stützbreite B hat synergetisch mit dem leichteren Einschneiden der Schneidzähne 12 den Vorteil, dass die Abstützwirkung vergrößert wird und die Einschneidtiefe der Schneidzähne 12 auch bei einer verstärkten Rückstellwirkung ausreichend begrenzt ist und insbesondere ein Abschneiden der Rohrleitung 6 verhindert.

Die Gestaltung des Biegewinkels α stellt bei dieser Ausführung insbesondere einen Hebel für den Halteabschnitt 10 ein. Abhängig vom kleinsten Abstand des Halteabschnitts 10 radial zur Zahnscheibenmittelachse X, insbesondere ist der kleinste Abstand am Mittelpunkt des Biegewinkels α, sowie dem Biegewinkel α selbst wird eine Anpressung zwischen der Stützfläche 18 und dem Außenumfang 14 der Rohrleitung 6 eingestellt.

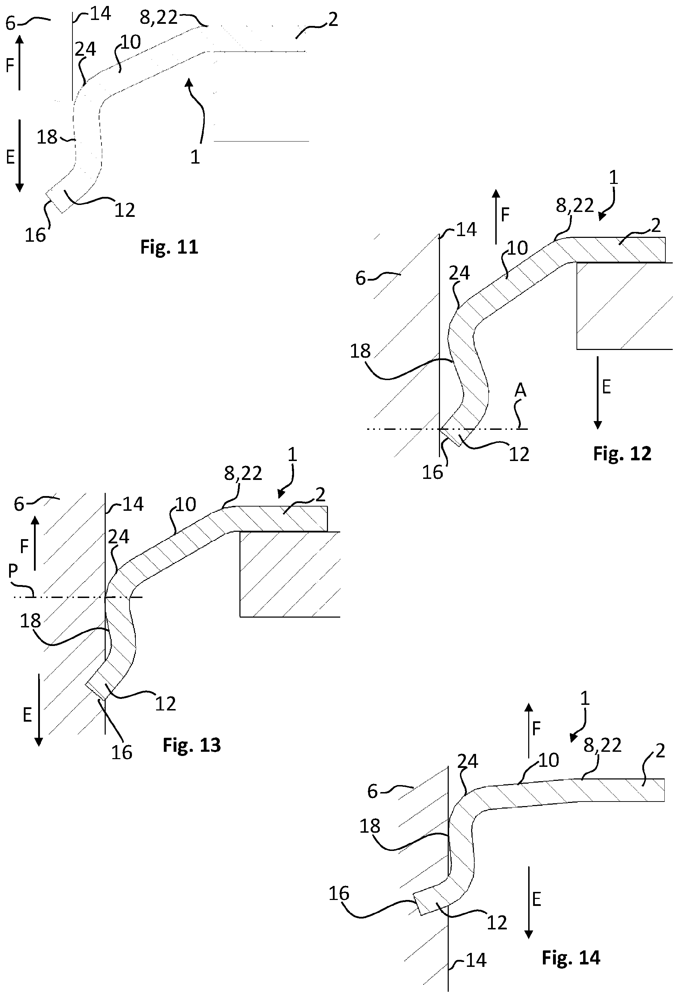

Erfindungsgemäß ist der Biegewinkel α, siehe Figur 10, derart gewählt, dass er in einem, wie in Figur 11 dargestellten, nicht montierten Zustand in einem Bereich zwischen kleiner/gleich 175° und größer/gleich 135° liegt, weil ab einem Winkel größer als 175° die Schneidzähne 12 bei der Fixierbewegung F der zu montierenden Rohrleitung 6 gegen die Einsteckrichtung E axial zur Zahnscheibenmittelachse X umschlagen und die Rohrleitung 6 durchschneiden würden. Andererseits würde bei einem Biegewinkel α kleiner als 135° die radiale Klemmkraft zu gering sein, und es käme zu einem Abschälen der zu montierenden Rohrleitung 6. Der Biegewinkel α der Zahnscheibe 1 beträgt insbesondere 90° bis 180°.

Insbesondere beträgt der Schneidwinkel γ3, siehe Figur 10, in dem in Figur 11 dargestellten nicht montierten Zustand 120° bis 150°, vorzugsweise 130° bis 140°, was ein besonders günstiges Winkelverhältnis für ein Einschneiden der Schneidflächen 16 in den Außenumfang 14 der Rohrleitung 6 darstellt. In diesem, in Figur 11 dargestellten Zustand, sind die Schneidflächen 16 der Schneidzähne 12 in einer inneren Kreisbahn angeordnet, welche einen geringeren Durchmesser aufweist als der Außenumfang 14 der zu montierenden Rohrleitung 6.

In Figur 12 ist ein Montageschritt dargestellt, in welchem die Rohrleitung 6 in Einsteckrichtung E an den Schneidflächen 16 vorbeigeführt wird, wodurch die Schneidzähne 12 radial von der Zahnscheibenmittelachse X nach außen gedrückt wurden und sich dadurch der Schneidwinkel γ3 verringert hat. Hierbei ist insbesondere zu erkennen, dass die Schneidflächen 16 angewinkelt an dem Außenumfang 14 der Rohrleitung 6 anliegen

Figur 13 zeigt den in Figur 12 dargestellten Montageschritt folgenden Montageschritt. In diesem Montageschritt wird die Rohrleitung 6 mit einer Fixierbewegung F aus dem in Figur 12 dargestellten Zustand mit einer Fixierbewegung F gegen die Einsteckrichtung E bewegt. Mittels der federelastischen Rückstellwirkung der Schneidzähne 12 schneiden selbige, abhängig von dem Material der Rohrleitung 6 und der Geometrie der Schneidflächen 16, in den Außenumfang 14 der Rohrleitung 6 ein.

Vorzugsweise erzeugt die Zahnscheibe 1 durch das Einschneiden der Schneidflächen 16 in einer Einschneidebene A in den Außenumfang 14 der Rohrleitung 6 einen Kraft-Form-Schluss. Weiterhin entsteht durch die vorteilhafte Bewinklung der einzelnen Abschnitte bei der Fixierbewegung F und der dabei entstehenden Tendenz des Schneidzahns 12, den Schneidwinkel γ3 zu vergrößern, eine radial zur Zahnscheibenmittelachse X gerichtete Anpressung zwischen der Stützfläche 18 und dem Außenumfang 14 des Rohres. Dieser Kraftschluss erfolgt insbesondere über den Umfang des Außenrohres gleichmäßig verteilt in einer axial zur Zahnscheibenmittelachse X von der Einschneidebene A in Richtung der Fixierbewegung F versetzten und parallel zur Einschneidebene A ausgerichteten Pressebene P.

Weiterhin wird durch eine derartige Ausführung mittels der Stützfläche 18 synergetisch das Einschneidverhalten verbessert, da das Einschneiden in eine zu fixierende Rohrleitung 6 bei der Fixierbewegung F durch die Anlage der Stützfläche 18 auf dem Außenumfang 14 der Rohrleitung 6 begrenzt wird, und gleichzeitig durch die Verformung des Schneidzahns 12 bei der Fixierbewegung F die Stützfläche 18 radial gegen den Außenumfang 14 gepresst wird und die Lage der Rohrleitung 6 relativ zu der Zahnscheibe 1 ergänzend mit einem Kraftschluss sichert.

Diesbezüglich ist der Stützwinkel β insbesondere derart gewählt, dass, wie in Figur 13 dargestellt, nach einem ersten geringfügigen Einschneiden der Schneidfläche 16 in den Außenumfang 14 der Rohrleitung 6 die Stützfläche 18 radial gegen den Außenumfang 14 der Rohrleitung 6 gedrückt wird. Für eine Rohrleitung 6 mit einem Außendurchmesser von 12 mm ist der Stützwinkel β vorzugsweise so gewählt, dass die für einen ersten Anlagekontakt der Stützfläche 18 auf dem Außenumfang 14 der Rohrleitung 6 notwendige Einschneidtiefe insbesondere 0,3 mm beträgt.

Weiterhin sind die Längen der Halteabschnitte 10 sowie die Biegewinkel α vorzugsweise derart gewählt, dass die Übergangsstellen von den Halteabschnitten 10 zu den Stützflächen 18 in der Pressebene P auf einem Kreisumfang liegen, dessen Durchmesser vorzugsweise größer ist als der Außendurchmesser der zu montierenden Rohrleitung 6. Würde die Stützfläche 18 an der zu montierenden Rohrleitung 6 anliegen, bevor die Schneidfläche 16 geringfügig in den Außenumfang 14 der Rohrleitung 6 eingeschnitten hat, könnte das dazu führen, dass die Schneidflächen 16 durch eine verringerte Rückstellwirkung der federelastischen Schneidzähne 12 nicht in den Außenumfang 14 der Rohrleitung 6 einschneiden und es dadurch zu einem Durchrutschen der Rohrleitung kommen könnte. Wenn der Kreisumfang der Stützflächen 18 in der Pressebene P zu groß ist, könnte es passieren, dass der vorteilhafte Effekt einer radialen Abstützung sowie der Einschneidbegrenzung nicht erreicht wird und die Schneidzähne 12 ungewollt tief in die Rohrleitung 6 einschneiden.

Figur 14 zeigt einen maximalen Druckbelastungsfall der Rohrleitung 6. Die maximale Druckbelastung der Rohrleitung 6 liegt kurz vor Erreichung eines Berstdrucks, welcher ein Rohrversagen zur Folge hat. Durch die Tendenz des Schneidzahns 12, beim Einschneiden synergetisch mit der axialen Fixierbewegung F gegen die Einsteckrichtung E den Schneidwinkel γ3 zu vergrößern, wurde die Stützfläche 18 radial gegen den Außenumfang 14 der Rohrleitung 6 derartig anliegend verpresst, dass ein weiteres Einschneiden der Schneidzähne 12 stark begrenzt ist und ein Abschneiden oder Abreißen der Rohrleitung auch unter maximaler Druckbelastung effektiv verhindert ist. Hierbei können vorteilhaft die Winkelmaße α, β, γ3 der Übergänge vom Halteabschnitt 10 zu der Stützfläche 18 und von der Stützfläche 18 zum Schneidzahn 12 sowie die Längen des Halteabschnitts, der Stützfläche 18 und des Schneidzahns 12 derartig gewählt werden, dass bei einer vorbestimmten Einschneidtiefe der Schneidflächen 16 die Stützfläche 18 die maximale radiale Anpresskraft aufbringt.

In den Figuren 9a und 9b sind jeweils eine vorteilhafte Ausführung dargestellt, gemäß welcher die ringförmige Basis 2 jeweils zwischen zwei Biegegelenkabschnitten 8 verrundete Torsionsverstärkungen 26 ausgebildet hat, deren Scheitelpunkt zu der Zahnscheibenmittelachse X hinweisend ausgerichtet sind. Auf vorteilhafte Weise unterbinden die Torsionsverstärkungen 26 ein Verdrehen der Zahnscheibe 1 und verhindern dadurch, dass sich das Einschneidverhalten auf Grund einer Veränderung der Geometrie der Basis 2 mit Auswirkung auf die Biegegelenkabschnitte 8 verändert und/oder sich die Zahnscheibe 1, insbesondere in einem Fluidverbinder 4, verkantet.

In Figur 15 ist ein Fluidverbinder 4 zur Rohrleitungsmontage dargestellt. Vorzugsweise wird dieser Fluidverbinder 4 für die Montage fluidführender Rohrleitungen 6 verwendet. Wie dargestellt weist der Fluidverbinder 4 einen Aufnahmeabschnitt zur Einführung einer Rohrleitung 6 in einer Einführrichtung sowie ein im Aufnahmeabschnitt 28 angeordnetes Halteelement auf.

Erfindungsgemäß ist das Halteelement als eine Zahnscheibe 1 gemäß einer Ausführung der vorgenannten Art, insbesondere nach einer in den Figuren 9a bis 14 dargestellten Ausführung, ausgebildet.

### Bezugszeichenliste

- 1: Zahnscheibe
- 2: Basis
- 4: Fluidverbinder
- 6: Rohrleitung
- 8: Biegegelenkabschnitt
- 10: Halteabschnitt
- 12: Schneidzahn
- 13: Zahn
- 14: Außenumfang der Rohrleitung
- 16: Schneidfläche
- 18: Stützfläche
- 20: Teilkreissegment
- 22: Erste Biegung
- 24: Zweite Biegung
- 26: Torsionsverstärkung
- 28: Aufnahmeabschnitt
- 30: Verstärkter Abstützbereich
- U: Überstand
- S: Schneidbreite
- B: Stützbreite
- D1: Schneiddicke
- D2: Stützdicke
- P: Pressebene
- A: Einschneidebene
- X: Zahnscheibenm ittelachse
- F: Fixierbewegung
- E: Einsteckrichtung
- α: Biegewinkel
- β: Stützwinkel
- γ1, γ2, γ3: Schneidwinkel

## Patentansprüche

1. Zahnscheibe (1), insbesondere zur Fixierung einer in einem Fluidverbinder (4) in einer Einsteckrichtung (E) eingeführten Rohrleitung (6), aufweisend eine ringförmige Basis (2) mit einer Zahnscheibenmittelachse (X), wobei am Innenumfang der Basis (2) jeweils über einen angeformten federelastischen Biegegelenkabschnitt (8) und einen sich daran anschließenden angeformten Halteabschnitt (10) Schneidzähne (12) radial nach innen und schräg zur Zahnscheibenmittelachse (X) und in Einsteckrichtung (E) verlaufend einteilig an der Basis (2) angeordnet sind, wobei die Schneidzähne (12) derart ausgebildet sind, dass diese bei einer Fixierbewegung (F) der Rohrleitung (6) gegen die Einsteckrichtung (E) in einen Außenumfang (14) der Rohrleitung (6) einschneiden, wobei die Schneidzähne (12) eine Schneidfläche (16) zum Einschneiden in den Außenumfang (14) der zu fixierenden Rohrleitung (6) aufweisen, wobei die Schneidzähne (12) eine Stützfläche (18) aufweisen, und die Stützfläche (18) von der Schneidfläche (16) betrachtet radial nach außen zurückversetzt ausgebildet ist, so dass das Einschneiden des jeweiligen Schneidzahns (12) bei einer Anlage der Stützfläche (18) auf den Außenumfang (14) der Rohrleitung (6) begrenzt wird, wobei die Stützfläche (18) jeweils zwischen dem Schneidzahn (12) und dem Halteabschnitt (10) einteilig mit dem Schneidzahn (12) und dem Halteabschnitt (10) verbunden angeordnet ist, wobei die Stützfläche (18) mit einer ersten Biegung (22) im Biegegelenkabschnitt (8) mittels des Halteabschnitts (10) verbunden ist und mit einer weiteren Biegung mit dem Schneidzahn (12) verbunden ist, wobei die Stützfläche (18) in einer von der Zahnscheibenmittelachse (X) abgewandten Richtung einen Stützwinkel (β) mit der Basis (2) einschließt, welcher kleiner ist als ein Biegewinkel (α), den der Halteabschnitt (10) in der von der Zahnscheibenmittelachse (X) abgewandten Richtung mit der Basis (2) einschließt,
**dadurch gekennzeichnet, dass**
der Biegewinkel (α) in einem nicht montierten Zustand in einem Bereich zwischen kleiner/gleich 175° und größer/gleich 135° liegt.

2. Zahnscheibe (1) nach Anspruch 1,
**dadurch gekennzeichnet, dass** der Schneidzahn (12) in der von der Zahnscheibenmittelachse (X) abgewandten Richtung einen Schneidwinkel (γ3) mit der Basis (2) einschließt, wobei der Schneidwinkel (γ3) größer ist als der Stützwinkel (β).

3. Zahnscheibe (1) nach Anspruch 1 oder 2,
**dadurch gekennzeichnet, dass** die ringförmige Basis (2) jeweils zwischen zwei Biegegelenkabschnitten (8) verrundete Torsionsverstärkungen (26) ausgebildet hat, deren Scheitelpunkte zu der Zahnscheibenmittelachse (X) hinweisend ausgerichtet sind.

4. Zahnscheibe (1) nach einem der Ansprüche 1 bis 3,
**dadurch gekennzeichnet, dass** die Stützfläche (18) in einem verstärkten Abstützbereich (30) angeordnet ist, wobei eine Stützbreite (B) der Stützfläche (18) zumindest im Bereich des verstärkten Abstützbereichs (30) einer Schneidbreite (S) des Schneidzahns (12) entspricht.

5. Zahnscheibe (1) nach einem der Ansprüche 1 bis 4,
**dadurch gekennzeichnet, dass** die Schneidflächen (16) und/oder die Stützflächen (18) jeweils als Teilkreissegmente (20) um einen Mittelpunkt gebogen ausgebildet sind, wobei die Mittelpunkte jeweils zu der Zahnscheibenmittelachse (X) ausgerichtet sind, insbesondere dass die Mittelpunkte der Teilkreissegmente (20), vorzugsweise in einem unverformten Zustand der Zahnscheibe, in der Zahnscheibenmittelachse (X) liegen.

6. Zahnscheibe (1) nach einem der Ansprüche 1 bis 5,
**dadurch gekennzeichnet, dass** die ringförmige Basis (2) jeweils zwischen zwei Biegegelenkabschnitten (8) verrundete Torsionsverstärkungen (26) ausgebildet hat, deren Scheitelpunkte zu der Zahnscheibenmittelachse (X) hinweisend ausgerichtet sind.

7. Zahnscheibe (1) nach einem der Ansprüche 1 bis 6,
**dadurch gekennzeichnet, dass** die Schneidzähne (12) jeweils mindestens zwei Zähne (13) aufweisen, an welchen die Schneidfläche (16) ausgebildet ist, wobei zwischen den Zähnen (13) jeweils die Stützfläche (18) ausgebildet ist, wobei die Schneidflächen (16) fluchtend zu den Stützflächen (18) ausgebildet sind.

8. Zahnscheibe (1) nach einem der Ansprüche 1 bis 7,
**dadurch gekennzeichnet, dass** die Schneidflächen (16) der Schneidzähne (12) jeweils eine Schneidoberfläche und die Stützfläche (18) der Schneidzähne (12) jeweils eine Stützoberfläche aufweisen, wobei jeder Schneidzahn (12) ein Verhältnis von einer Summe der Schneidoberflächen der Schneidflächen (16) zu einer Summe der Stützoberflächen der Stützflächen (18) aufweist, welches in einem Bereich von 0,8 bis 1,2, insbesondere 0,9 bis 1,1 liegt, bevorzugt 1 entspricht.

9. Zahnscheibe (1) nach einem der Ansprüche 1 bis 8,
**dadurch gekennzeichnet, dass** die Schneidflächen (16) jeweils eine Schneiddicke (D1) aufweisen, welche der axialen Erstreckung der Schneidflächen (16) zu der Zahnscheibenmittelachse (X) im Bereich der Schneidflächen (16) entspricht und die Stützflächen (18) jeweils eine Stützdicke (D2) aufweisen, welche der axialen Erstreckung im Bereich der Stützflächen (18) entspricht, wobei die Stützdicke (D2) der Stützfläche (18) zumindest teilweise größer ist als die Schneiddicke (D1) der Schneidfläche (16).

10. Zahnscheibe (1) nach Anspruch 9,
**dadurch gekennzeichnet, dass** die Stützdicke (D2) der Stützfläche (18) zumindest teilweise doppelt so groß ist wie die Schneiddicke (D1) der Schneidfläche (16).

11. Fluidverbinder (4) zur Rohrleitungsmontage, insbesondere fluidführender Rohrleitungen (6), aufweisend einen Aufnahmeabschnitt (28) zur Einführung einer Rohrleitung (6) in einer Einführrichtung, sowie ein im Aufnahmeabschnitt (28) angeordnetes Halteelement,
**dadurch gekennzeichnet, dass** das Halteelement als eine Zahnscheibe (1) mit den Merkmalen nach einem der Ansprüche 1 bis 10 ausgebildet ist.

## Claims

1. Toothed washer (1), in particular for fixing a tube line (6) introduced in a fluid connector (4) in an insertion direction (E), including an annular base (2) having a toothed washer central axis (X), wherein at the inner circumference of the base (2), cutting teeth (12) are respectively disposed as a single component on the base (2) radially inward and obliquely to the toothed washer central axis (X) and extending in the insertion direction (E) over an overmolded resilient hinge section (8) and an overmolded retaining section (10) connected thereto, wherein the cutting teeth (12) are configured such that in the event of a fixing movement (F) of the tube line (6), the cutting teeth cutin against the insertion direction (E) into an outer circumference (14) of the tube line (6), wherein the cutting teeth (12) include a cutting surface (16) for cutting into the outer circumference (14) of the tube line (6) to be fixed, wherein the cutting teeth (12) have a support surface (18), and the support surface (18) is configured set back radially outward as viewed from the cutting surface (16), so that the cutting-in of the respective cutting tooth (12) is limited during a placing of the support surface (18) onto the outer circumference (14) of the tube line (6), wherein the support surface (18) is respectively disposed between the cutting tooth (12) and the retaining section (10) as a single component with the cutting tooth (12) and the retaining section (10), wherein the support surface (18) is connected to a first bending (22) in the hinge section (8) by the retaining section (10), and by a further bending to the cutting tooth (12), wherein the support surface (18) includes a support angle (β) with the base (2) in a direction pointing away from the toothed washer central axis (X), which support angle (β) is smaller than a bending angle (α) that the retaining section (10) includes with the base (2) in the direction pointing away from the toothed washer central axis (X)
**characterized in that**
the bending angle (α) in a not-installed state lies within a range between less than/equal to 175° and greater than/equal to 135°.

2. Toothed washer (1) according to claim 1,
**characterized in that** the cutting tooth (12) includes a cutting angle (γ3) with the base (2) in the direction pointing away from the toothed washer central axis (X), wherein the cutting angle (γ3) is greater than the support angle (β)

3. Toothed washer (1) according to claim 1 or 2,
**characterized in that** the annular base (2) has rounded-off torsion reinforcements (26) between each two hinge sections (8), the peaks of which torsion reinforcements (26) are oriented toward the toothed washer central axis (X).

4. Toothed washer (1) according to one of claims 1 to 3,
**characterized in that** the support surface (18) is disposed in a reinforced supporting region (30), wherein a support width (B) of the support surface (18) at least in the area of the reinforced supporting region (30) corresponds to a cutting width (S) of the cutting tooth (12).

5. Toothed washer (1) according to one of claims 1 to 4,
**characterized in that** the cutting surfaces (16) and/or the support surfaces (18) are each configured as pitch-circle segments (20) bent about a center point, wherein the center points are each oriented with respect to the toothed washer central axis (X), in particular that the center points of the pitch-circle segments (20), preferably in an undeformed state of the toothed washer, lie in the toothed washer central axis (X).

6. Toothed washer (1) according to one of claims 1 to 5,
**characterized in that** the annular base (2) has rounded-off torsion reinforcements (26) between each two hinge sections (8), the peaks of which torsion reinforcements (26) are oriented toward the toothed washer central axis (X).

7. Toothed washer (1) according to one of claims 1 to 6,
**characterized in that** the cutting teeth (12) each include at least two teeth (13) on which the cutting surface (16) is formed, wherein the support surface (18) respectively formed between the teeth (13), wherein the cutting surfaces (16) are configured flush with the support surfaces (18).

8. Toothed washer (1) according to one of claims 1 to 7,
**characterized in that** the cutting surfaces (16) of the cutting teeth (12) each have a cutting upper surface, and the support surfaces (18) of the cutting teeth (12) each have a support upper surface, wherein each cutting tooth (12) has a ratio of a sum of the cutting upper surfaces of the cutting surfaces (16) to a sum of the support upper surfaces of the support surfaces (18), which lies in a range of 0.8 to 1.2, in particular 0.9 to 1.1, preferably corresponding to 1.

9. Toothed washer (1) according to one of claims 1 to 8,
**characterized in that** the cutting surfaces (16) each have a cutting thickness (D1) that corresponds to the axial extension of the cutting surfaces (16) with respect to the toothed washer central axis (X) in the region of the cutting surfaces (16), and the support surfaces (18) each have a support thickness (D2), which corresponds to the axial extension in the region of the support surfaces (18), wherein the support thickness (D2) of the support surface (18) is at least in part greater than the cutting thickness (D1) of the cutting surface (16).

10. Toothed washer (1) according to claim 9,
**characterized in that** the support thickness (D2) of the support surface (18) is at least in part twice as large as the cutting thickness (D1) of the cutting surface (16).

11. Fluid connector (4) for tube line installation, in particular fluid-guiding tube lines (6), including a receptacle section (28) for introducing a tube line (6) in an insertion direction, as well as a retaining element disposed in the receptacle section (28),
**characterized in that** the retaining element is configured as a toothed washer (1) having the features according to one of claims 1 to 10.

## Revendications

1. Rondelle dentée (1), en particulier pour fixer une ligne de tube (6) introduite dans un connecteur de fluide (4) dans une direction d'insertion (E), comprenant une base annulaire (2) ayant un axe central de rondelle dentée (X), dans laquelle à la circonférence intérieure de la base (2), des dents de coupe (12) sont respectivement disposées comme un composant unique sur la base (2) radialement vers l'intérieur et obliquement à l'axe central de rondelle dentée (X) et s'étendant dans la direction d'insertion (E) sur une section de charnière résiliente surmoulée (8) et une section de retenue surmoulée (10) qui y est connectée, dans laquelle les dents de coupe (12) sont configurées de telle sorte qu'en cas de mouvement de fixation (F) de la ligne de tube (6), les dents de coupe s'enfoncent contre la direction d'insertion (E) dans une circonférence extérieure (14) de la ligne de tube (6), dans laquelle les dents de coupe (12) comprennent une surface de coupe (16) pour couper dans la circonférence extérieure (14) de la ligne de tube (6) à fixer, dans laquelle les dents de coupe (12) ont une surface de support (18), et la surface de support (18) est configurée en retrait radialement vers l'extérieur vue depuis la surface de coupe (16), de sorte que l'enfoncement de la dent de coupe respective (12) est limité lors d'un placement de la surface de support (18) sur la circonférence extérieure (14) de la ligne de tube (6), dans laquelle la surface de support (18) est respectivement disposée entre la dent de coupe (12) et la section de retenue (10) comme un composant unique avec la dent de coupe (12) et la section de retenue (10), dans laquelle la surface de support (18) est connectée à un premier pliage (22) dans la section de charnière (8) par la section de retenue (10), et par un autre pliage à la dent de coupe (12), dans laquelle la surface de support (18) comprend un angle de support (β) avec la base (2) dans une direction pointant loin de l'axe central de rondelle dentée (X), lequel angle de support (β) est plus petit qu'un angle de pliage (α) que la section de retenue (10) comprend avec la base (2) dans la direction pointant loin de l'axe central de rondelle dentée (X)
**caractérisée en ce que**
l'angle de pliage (α), tombe dans un état non installé dans une plage entre inférieur ou égal à 175° et supérieur ou égal à 135°.

2. Rondelle dentée (1) selon la revendication 1,
**caractérisée en ce que** la dent de coupe (12) comprend un angle de coupe (γ3) avec la base (2) dans la direction pointant loin de l'axe central de rondelle dentée (X), dans laquelle l'angle de coupe (γ3) est supérieur à l'angle de support (β).

3. Rondelle dentée (1) selon la revendication 1 ou 2,
**caractérisée en ce que** la base annulaire (2) a des renforts de torsion arrondis (26) entre chaque deux sections de charnière (8), dont les pics de ces renforts de torsion (26) sont orientés vers l'axe central de rondelle dentée (X).

4. Rondelle dentée (1) selon l'une des revendications 1 à 3,
**caractérisée en ce que** la surface de support (18) est disposée dans une région de support renforcée (30), dans laquelle une largeur de support (B) de la surface de support (18) au moins dans la zone de la région de support renforcée (30) correspond à une largeur de coupe (S) de la dent de coupe (12).

5. Rondelle dentée (1) selon l'une des revendications 1 à 4,
**caractérisée en ce que** les surfaces de coupe (16) et/ou les surfaces de support (18) sont chacune configurées comme des segments de cercle primitif (20) pliés autour d'un point central, dans laquelle les points centraux sont chacun orientés par rapport à l'axe central de rondelle dentée (X), en particulier que les points centraux des segments de cercle primitif (20), de préférence dans un état non déformé de la rondelle dentée, se trouvent dans l'axe central de rondelle dentée (X).

6. Rondelle dentée (1) selon l'une des revendications 1 à 5,
**caractérisée en ce que** la base annulaire (2) a des renforts de torsion arrondis (26) entre chaque deux sections de charnière (8), dont les pics de ces renforts de torsion (26) sont orientés vers l'axe central de rondelle dentée (X).

7. Rondelle dentée (1) selon l'une des revendications 1 à 6,
**caractérisée en ce que** les dents de coupe (12) comprennent chacune au moins deux dents (13) sur lesquelles la surface de coupe (16) est formée, dans laquelle la surface de support (18) respectivement formée entre les dents (13), dans laquelle les surfaces de coupe (16) sont configurées à fleur avec les surfaces de support (18).

8. Rondelle dentée (1) selon l'une des revendications 1 à 7,
**caractérisée en ce que** les surfaces de coupe (16) des dents de coupe (12) ont chacune une surface supérieure de coupe, et les surfaces de support (18) des dents de coupe (12) ont chacune une surface supérieure de support, dans laquelle chaque dent de coupe (12) a un rapport d'une somme des surfaces supérieures de coupe des surfaces de coupe (16) à une somme des surfaces supérieures de support des surfaces de support (18), qui se situe dans une plage de 0,8 à 1,2, en particulier 0,9 à 1,1, de préférence correspondant à 1.

9. Rondelle dentée (1) selon l'une des revendications 1 à 8,
**caractérisée en ce que** les surfaces de coupe (16) ont chacune une épaisseur de coupe (D1) qui correspond à l'extension axiale des surfaces de coupe (16) par rapport à l'axe central de rondelle dentée (X) dans la région des surfaces de coupe (16), et les surfaces de support (18) ont chacune une épaisseur de support (D2), qui correspond à l'extension axiale dans la région des surfaces de support (18), dans laquelle l'épaisseur de support (D2) de la surface de support (18) est au moins en partie supérieure à l'épaisseur de coupe (D1) de la surface de coupe (16).

10. Rondelle dentée (1) selon la revendication 9,
**caractérisée en ce que** l'épaisseur de support (D2) de la surface de support (18) est au moins en partie deux fois plus grande que l'épaisseur de coupe (D1) de la surface de coupe (16).

11. Connecteur de fluide (4) pour installation de ligne de tube, en particulier lignes de tube conductrices de fluide (6), comprenant une section de réceptacle (28) pour introduire une ligne de tube (6) dans une direction d'insertion, ainsi qu'un élément de retenue disposé dans la section de réceptacle (28),
**caractérisé en ce que** l'élément de retenue est configuré comme une rondelle dentée (1) ayant les caractéristiques selon l'une des revendications 1 à 10.
